# EUROPEAN PATENT SPECIFICATION

(11) **EP 0 499 592 B1**
(45) Date of publication and mention of the grant of the patent: **13.08.1997**
(21) Application number: 92830051.6
(22) Date of filing: 05.02.1992
(51) Int. Cl.: E04H 5/04, H02B 7/08

(54) **Underground transformer cabin consisting of two units, one inside the other**
Unterflurtransformatorengehäuse aus zwei Teilen, von welchem das eine in dem zweiten untergebracht ist
Poste de transformation souterrain constitué de deux unités dont l'une enveloppe l'autre

(30) Priority: 12.02.1991 IT MC910014
(43) Date of publication of application: 19.08.1992
(73) Proprietor: COSMO SERI, I-62020 Colmurano (MC) (IT)
(72) Inventor: Seri, Cosmo, I-62020-Colmurano (MC) (IT)
(74) Representative: Baldi, Claudio

(56) References cited:
- US-A- 3 345 449
- US-A- 4 709 120

## Description

This application for a design patent concerns an underground transformer cabin consisting of two units, one inside the other, in which the external unit is designed to support earth pressure, the weight of the covering plate and the stress caused by surface traffic, while the smaller internal unit is designed specifically for the installation of electrical equipment, as described in US-A-4 709 120.

It is common knowledge that in cities and large urban areas, the enormous electric power needed and the lack of space, has made it necessary to build an increasing number of underground electric cabins.

To date, these cabins have always been box-shaped, consisting of a single large parallelepiped box made of reinforced concrete with two incorporated or applied air vents for the air flow and exchange in the cabin.

In fact, one of the most important technical specifications for these cabins is the specification requiring continuous and efficient natural ventilation of the cabins, to ensure adequate cooling of the transformer and to avoid the very dangerous formation of water condensation.

To provide adequate ventilation of the cabin, generally, partition panels are used to direct the incoming fresh air towards the base of the transformer, while the outlet openings for the hot air are provided at the top, opposite the inlet openings, in order to provide natural ventilation based on an ascending air current which passes through the electric cabin continuously.

A patent of this kind is described by US Patent No. 3345449 involving an underground electric cabin in which outdoor cooling air is drawn, by means of a descending channel that passes through the cabin, into an air space under the flooring supporting the electrical equipment, which are cooled by the cold air that rises from the floor towards the roof of the cabin where an outlet for the hot air is fitted that conveys the air towards the flue and consequently outdoors.

Another type of underground transformer cabin is referred to in US patent 4709120 which describes a cabins consisting of two concentric units, an inner wooden unit and an outer metal unit.

A very small air space is provided between the two units.

The electrical equipment is cooled by forced air current generated by suction units operated by a sophisticated control system which regulates the ambient conditions in the cabin.

Said cabin does not have intercommunication pipes with the exterior which generate natural air circulation in the cabin causing fresh outdoor air to be drawn into the cabin by the draught generated by the hot air escaping from the cabin.

The purpose of this invention is to design a new type of underground electric cabin specifically to improve the natural ventilation system of the unit since to date no proper and final solution has been found for this particular and important technical problem.

The inventive solution consists of two prefabricated monolithic units made of vibrated reinforced concrete, having different sizes, so that one can be housed in the other.

The larger unit, that can be constructed on site, is constructed in compliance with all the technical specifications required by current standards, which, above all call for an elevated resistance to earth pressure, total water-tightness to water from the surface or water tables, resistance to heavy traffic.

The smaller unit which houses the electrical equipment, rests on a bottom supporting frame constructed at a certain height from the floor of the larger unit, so that a space is created between the two units which encircles the smaller unit around its four walls as well as under its floor.

This air space communicates to the interior of the smaller unit, through small windows on the floor of the latter as well as through a small perimeter space corresponding to the empty space between the top edge of the four walls of the smaller unit and the bottom surface of the covering plate of the larger unit.

Fresh air from the exterior enters from under the floor of the smaller unit, while the output of heated air is positioned on the ceiling of the latter, this inlet is connected to a vertical pipe which opens to the exterior at a certain height from the ground, and which acts as a natural draught for the hot air inside the smaller unit, where the incoming air in the above external air space is in this way drawn in through the floor.

More specifically, inside the cabin a spontaneous ascending movement of air is created, which after touching the transformer, is heated; a part of this air is channelled into the output pipe and the rest returns downwards through the air space between the two units as a result of the expansion caused by the increase of the specific volume of the air flow having a higher average temperature and the attraction of the air in lower section whose temperature and specific volume are lower.

This latter part of the air which circulates in the above space, passes the heat to the surrounding ground through the walls of the larger unit, and is then mixed with the incoming fresh air and resumes its ascending movement together with the latter, again through the floor of the smaller unit.

The partial recycling of the hot air inside the cabin offers many advantages due to the fact that mixing of the hot recycled air and the cold outdoor air reduces the thermal fluctuations in the smaller unit.

Attention is drawn to the fact that thanks to the partial recycling of hot air in the cabin, the temperature variations of the air current striking the electric equipment is affected both by the thermal fluctuations of the ambient air but also by the heat dispersed by the electric equipment itself.

This means that the temperature of the cooling air is self-regulated according to the major or minor load of the electric appliances in that while the outdoor air temperature remains unvaried, the more the equipment overheats due to the power supplied, the higher the temperature of the air striking the electric equipment will be.

This thermal self-regulation of the air current that passes through the smaller unit prevents excessively cold air which would create damaging thermal shock, from striking the electric equipment.

Preheating the outdoor air by means of the recycled hot air offers another advantage, namely that of reducing the risk of condensate, due to abrupt and large temperature fluctuations, in the smaller unit.

Moreover, the internal unit is an important mass of thermal accumulation which returns the heat absorbed to the room when the internal temperature of the cabin drops, for example, during the times of lower electrical energy absorption.

Thanks to this new and revolutionary construction design with double units, the electric equipment installed inside the underground cabin according to the invention will have a natural and efficient ventilation that can adequately stabilise the average temperature in the transformer room and prevent the formation of water condensation in the unit.

In this regard, it should be noted that the covering plate of the larger unit is insulated thermically so as to maintain the internal temperature as constant as possible, while controlling the temperature variations between day and night, and preventing sudden drops in temperature at night as a result of dispersion to the exterior of the heat accumulated by the covering plate. All these features contribute to avoiding condensation inside the cabin.

The cabin according to the invention also offers the advantage of having eliminated the bulky air vents with their air inlet and outlet grids, installed flush to the ground, since in this cabin the air exchange is through two small pipes, for intake and expulsion accordingly.

For major clarity the description of the invention continues with reference to the enclosed drawings which are intended for illustrative purposes and not in a limited sense:
- fig. 1 illustrates the electric cabin according to the invention, cross-sectioned on a vertical plane;
- fig. 2 is a plan view of the electric cabin according to the invention.

With reference to the above drawings, the underground electric cabin in question consists of two rectangular units, one of which is larger (1) than the other (2), which is housed inside the first (1).

The larger unit (1), namely the one which is to support the earth pressure, is covered at the top by a plate (1a) which is installed flush to the ground.

The smaller unit (2) is elevated with respect to the floor of the larger unit (1) since it rests on a supporting frame (1b) inside unit (1), at a certain height from its bottom.

The transverse dimensions of the smaller unit (2) ensure that there is an air space (3) encircling the sides and the bottom of the same.

This air space (3) communicates to the interior of the unit (2) through windows (2a) on the floor of unit (2) where the transformer (T) and the switchboard (Q) are positioned.

The only other point thorough which unit (2) and the air space (3) communicate is between the perimeter space (4) which separates the top edge of the four sides of the unit (2) from the bottom surface of the above covering plate (1a).

The external air intake pipe (5), after a first descending section installed outside the larger unit (1), terminates with a horizontal section (5a) with which it enters laterally into the latter, close to its bottom so as to convey the fresh air under the floor of the smaller unit (2), exactly where the air tends to enter through the windows (2a).

This fresh air touches the transformer and is heated and then spontaneously rises towards the top of the unit (2), where the air outlet (6a) is positioned; said air outlet (6a) crosses the sides of the two units and is joined to another vertical pipe (6) through which the hot air is returned to the atmosphere.

Attention is drawn to the fact that the ground surrounding the descending section of the intake pipe (5) cools the incoming air during the day and summer while it warms the air during the night or winter, and consequently tends to stabilise the average temperature inside the cabin.

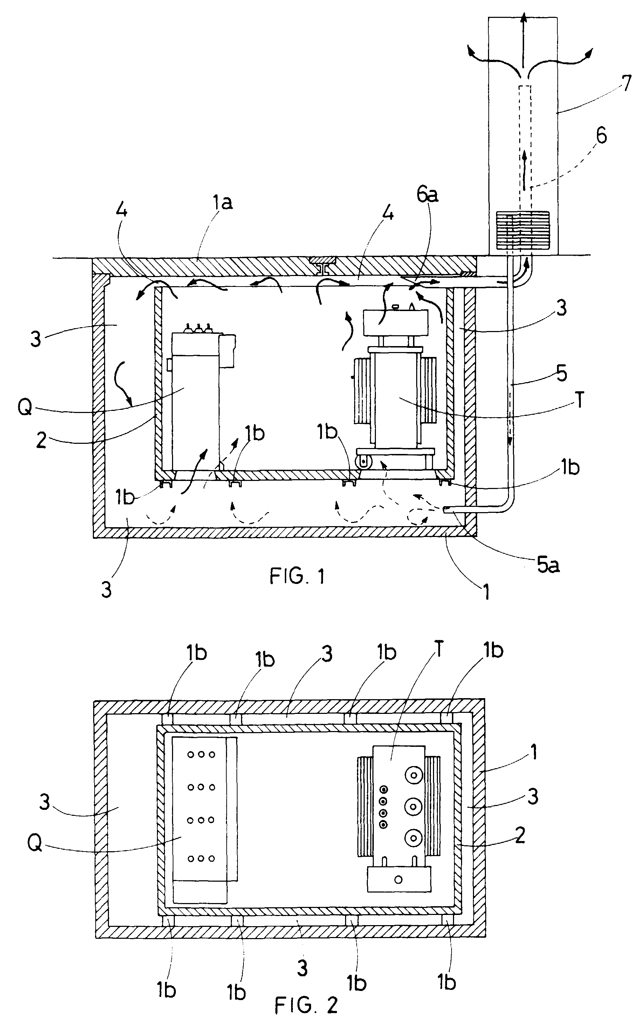

Fig. 1 illustrates the air flow inside the cabin; the unbroken arrows refer to the hot air and the broken arrows to the fresh air.

Moreover, it should be noted that the intake opening for the fresh air is lower than the height at which the hot air is returned to the atmosphere.

In this regard, it should be noted that the air current inside the cabin can be adjusted by regulating this difference in height, in that the drain pipe (6) acts as a flue, and creates a natural draught which will be increasingly efficient as its height with respect to the room air intake increases.

In Fig. 1, no. 7 indicates a metal structure for housing and protecting the pipes (5 and 6), which could alternatively be fixed on the walls of existing buildings or matched to urban structures, together with a low voltage switchboard.

Obviously, even though the double unit cabin according to the invention is designed especially for burying electric equipment, it can be used just as efficiently, according to the principles of this invention concept, for the installation of telephone exchanges, thermal plants, power generating units etc.

## Claims

1. An underground transformer cabin consisting of two units for housing the electrical equipment, one inside the other, said interior unit (2) resting on a supporting frame (1b) inside the exterior unit (1), the dimensions of the interior unit being such that there is a wide air space (3) between the units which encircles the smaller unit (2) on the sides and at the bottom, characterised in that each of said unit is a prefabricated unit made of vibrated reinforced concrete having side walls and a floor, the exterior unit (1) is closed at the top by a plate (1a), said interior unit (2) and air space (3) intercommunicate thorough several windows (2a) on the floor of the interior unit (2) and through the perimeter space (4) which separates the top edge of the four sides walls of the interior unit (2) from the bottom surface of the covering plate (1a), the cabin further comprises an inlet pipe for the external air (5) having an initial descending portion outside said external unit (1), a further portion crossing the side walls of said external unit (1) and a horizontal portion (5a) opening under the floor of said interior unit (2), an outlet pipe for the hot air, having a first outlet portion (6a), a further portion, crossing the sides of the two units and another portion of ascending pipe (6) opening to the exterior at a height greater than the height of the inlet opening of the said descending inlet pipe (5).

## Patentansprüche

1. Unterirdisches Umspannwerk bestehend aus zwei Zellen zum Unterbringen der elektrischen Vorrichtungen, wobei sich eine Zelle innerhalb der anderen befindet und besagte innere Zelle (2) auf einem Tragwerk aufliegt (1b), welches im Inneren der äußeren Zelle (1) vorgesehen ist, wobei die innere Zelle derart dimensioniert ist, daß ein ausgedehnter Zwischenraum (3) zwischen den Zellen entsteht, der die kleinere Zelle (2) seitlich und auf dem Boden umhüllt, dadurch gekennzeichnet, daß jede der besagten Zellen aus geschütteltem Beton vorgefertigt und mit Seitenwänden und einem Boden versehen ist, daß die äußere Zelle (1) oben mit einer Abdeckplatte (1a) geschlossen ist, besagte innere Zelle (2) und der Zwischenraum (3) durch verschiedene, aus dem Boden der inneren Zelle (2) herausgearbeitete Fenster (2a) und durch den Umfangsspalt (4) miteinander in Verbindung stehen, welcher den oberen Rand der vier Seitenwände der inneren Zelle (2) von der unteren Seite der Abdeckplatte (1a) trennt, wobei besagtes Umspannwerk darüber hinaus mit einem Außenlufteinlaßkanal (5) versehen ist, welcher eine Anfangsstrecke besitzt, die außerhalb der besagten, äußeren Zelle (1) nach unten verläuft, sowie eine zusätzliche Strecke, die die Seitenwände der besagten äußeren Zelle (1) durchläuft, und eine horizontale Strecke (5a), die unter dem Boden der besagten inneren Zelle (2) endet, und einen Warmluftentlüfiungskanal aufweist, dessen erste Strecke aus einem Ablaufstutzen (6a) besteht, deren zweite Strecke die Seiten der beiden Zellen durchläuft, während die Reststrecke als absteigendes Rohr (6) im Freien auf einer Höhe mündet, die im Vergleich zur Öffnung des besagten abwärts laufenden Belüftungskanals (5) höher ist

## Revendications

1. cabine électrique de transformation, enterrée, comprenant deux cellules pour contenir les appareils électriques, l'une inteme à l'autre, où ladite cellule inteme (2) résulte posée sur un châssis portant (1b) prévu à l'inteme de la cellule externe (1), là où les dimensions de la cellule interne sont telles qu'entre les cellules il y ait un large interstice (3) qui entoure la cellule plus petite (2) sur les côtés et sur le fond, caractérisée en ce que chacune des précitées cellules est une cellule préfabriquée en béton armé vibré et qu'elle est dotée de parois latérales et un sol; la cellule externe (1) étant fermée sur le haut par une plaque (1a), ladite cellule interne (2) et l'interstice (3) étant communicants à travers plusieurs fenêtres (2a) Urées à cet effet sur le sol de la cellule inteme (2) et à travers la fissure de périmètre (4) qui sépare le bord supérieur des quatre parois latérales de la cellule interne (2) de la face inférieure de la plaque de couverture (1a); là où ladite cabine comprend également un conduit de prise pour l'air externe (5) ayant un premier segment descendant à l'externe de ladite cellule externe (1), un ultérieur segment qui traverse les parois latérales de ladite cellule externe (1) et un segment horizontal (5a) qui débouche au-dessous du sol de ladite cellule inteme (2); un conduit de sortie de l'air chaud, ayant un premier segment de la buse d'évacuation (6a), un ultérieur segment qui traverse les côtés des deux cellules et un autre segment de tuyau ascendant (6) débouchant à l'externe à une hauteur majeure par rapport à la hauteur de l'ouverture du ledit conduit descendant de prise d'air (5).
